# EUROPÄISCHE PATENTSCHRIFT

(11) **EP 3 181 347 B1**
(45) Veröffentlichungstag und Bekanntmachung des Hinweises auf die Patenterteilung: **22.04.2020**
(21) Anmeldenummer: 16002332.1
(22) Anmeldetag: 03.11.2016
(51) Int. Cl.: B32B 7/12, B32B 27/08, B32B 3/12, B60R 13/02, B64C 1/40

(54) **SANDWICHBAUTEIL**
SANDWICH COMPONENT
COMPOSANT SANDWICH

(30) Priorität: 26.11.2015 DE 102015015340
(43) Veröffentlichungstag der Anmeldung: 21.06.2017
(73) Patentinhaber: Diehl Aviation Laupheim GmbH, 88471 Laupheim (DE)
(72) Erfinder: Harms, Andreas, 88459 Tannheim (DE); Hoffmann, Matthias, 88487 Mietingen (DE)
(74) Vertreter: Diehl Patentabteilung

(56) Entgegenhaltungen:
- WO-A1-2014/118928
- WO-A1-2014/153108
- DE-A1-102005 030 279
- DE-A1-102010 033 271
- DE-A1-102013 013 419
- US-A1- 2012 058 294
- DATABASE WPI Week 201364 Thomson Scientific, London, GB; AN 2013-N40937 XP002769001, -& JP 2013 184435 A (TOPPAN PRINTING CO LTD) 19. September 2013 (2013-09-19)

## Beschreibung

Die Erfindung betrifft ein Sandwichbauteil. Das Sandwichbauteil enthält ein Basisteil und ein Aufbauteil, wobei das Aufbauteil eine Soft-Touch-Oberfläche des Sandwichbauteils bildet bzw. bereitstellt.

Derartige Sandwichbauteile mit Soft-Touch-Oberflächen sind in Innenräumen von Fahrzeugen oft gewünscht. In der Praxis werden z.B. in Passagierkabinen als Innenräumen von Flugzeugen als Fahrzeugen Soft-Touch-Oberflächen bisher nur in VIP-Ausstattungen für spezielle Kunden und nicht für einen Serienprozess eingesetzt. Diese Aufbauten können teilweise nur aufwändig brandtechnisch qualifiziert werden. Berücksichtigt man Prozess- und Produktionsschwankungen der verwendeten Bauteile und Materialien, ergibt sich ein hohes Risiko, dass der Aufbau, d.h. das Sandwichbauteil, bei Auslieferteilen, also ein schlussendlich einzubauendes individuelles Sandwichbauteil die behördlichen Anforderungen nicht erfüllt. Denn z.B. unterliegen verwendete PU- oder CR-Schäume starken Produktionsschwankungen oder bei einer händischen Aufbringung von Sprühkleber mit einem Soll-Auftrag von 60g/qm (Gramm pro Quadratmeter) liegt der tatsächliche Auftrag im Bereich 40g/qm bis 100g/qm. Abstandsgewebe und Vliese können alternativ zu Schäumen als Funktionsschicht verwendet werden. Außerdem können bzw. müssen nicht nur Sprühkleber verwendet werden. Es können auch thermoplastische Klebstofffilme oder PSA-Klebstofffilme verwendet werden. Bereits wenn nur geringe Änderungen der Dekormaterialien erfolgen, zum Beispiel deren Farbe (unterschiedliche Farbpigmente dunkel/hell) oder Flächengewicht beziehungsweise Dicke geändert wird, sind teilweise vollständige Neuentwicklungen des gesamten Sandwichbauteils erforderlich.

Aus der WO 2014/153108 A1 ist ein Hochleistungs-Dekorlaminat mit einem weichen Fühleindruck ähnlich zu Leder oder Kunstleder für den Einsatz in der Luftfahrt bekannt. Ein Poly(vinyl Halogenid) oder ein Poly(Vinyliden Halogenid) Film wird mit einem flammwidrigen Multiblockcopolymer beschichtet und diese Schicht in Bezug auf Fühleindruck und Brandeigenschaften optimiert.

Aus der DE 10 2010 033 271 A1 ist ein Sandwichelement 1 zur schallabsorbierenden Innenverkleidung von Luftfahrzeugen bekannt. Eine Metallpartikel aufweisende Feuerhemmende Schicht kann sowohl für verbesserten Brandschutz als auch für eine elektromagnetische Isolation sorgen.

Aus der DE 10 2005 030 279 A1 ist eine mehrschichtige Wandverkleidung für Kraftfahrzeuge, insbesondere Personenkraftfahrzeuge, bekannt. Sie besteht aus einem mehrlagigen Laminat von Thermoplasten, welches mit Kunststoff hinterspritzt wird. Auf die Unterseite einer Dekorschicht wird eine erste Wärmeschutzschicht aufkaschiert. Sie ist wiederum Träger einer nachgiebigen Thermoplastschicht. Letztere wird durch eine zweite Wärmeschutzschicht vor den hohen Temperaturen des hinterspritzten Kunststoffes gestützt. Durch die Verwendung eines nachgiebigen Thermoplastes vermittelt das erfindungsgemäße Kunststoffelement aus haptischer Sicht ein qualitativ hochwertiges Gefühl.

Aufgabe der vorliegenden Erfindung ist es, Soft-Touch-Oberflächen in verbesserter Weise zur Verfügung zu stellen.

Die Aufgabe wird gelöst durch ein Sandwichbauteil gemäß Patentanspruch 1. Bevorzugte oder vorteilhafte Ausführungsformen der Erfindung sowie andere Erfindungskategorien ergeben sich aus den weiteren Ansprüchen, der nachfolgenden Beschreibung sowie den beigefügten Figuren.

Das Sandwichbauteil (im Allgemeinen auch als "Ausstattungsteil" bezeichnet) enthält ein Basisteil und ein Aufbauteil. Das Aufbauteil bildet eine Soft-Touch-Oberfläche des Sandwichbauteils. Insbesondere stellt das Aufbauteil eine Oberfläche zur Verfügung, die Soft-Touch-Eigenschaften aufweist und z.B. eine Sichtseite des Sandwichbauteils ist bzw. einer Berührung durch eine Person zugänglich ist. Die Soft-Touch-Eigenschaft wird alleine durch das Aufbauteil bewerkstelligt, das Basisteil trägt nicht zur Soft-Touch-Eigenschaft bei.

Das Aufbauteil enthält wenigstens zwei Funktionsschichten, wobei insbesondere wenigstens zwei der Funktionsschichten durch Klebstoff aneinander befestigt sind. Der Klebstoff ist insbesondere eine Klebstoffschicht. Auch das Aufbauteil ist dann ein Sandwichbauteil, wobei durch verschiedene Funktionsschichten verschiedene Eigenschaften des Aufbauteils getrennt voneinander steuerbar sind. So lassen sich besonders flexibel verschiedene Aufbauteile mit entsprechenden Soft-Touch-Eigenschaften erzeugen.

Eine der Funktionsschichten ist eine Soft-Touch-Schicht und eine andere der Funktionsschichten eine Dekorschicht. Die Soft-Touch-Schicht ist zwischen der Dekorschicht und dem Basisteil angeordnet. Die Dekorschicht bildet die Soft-Touch-Oberfläche des Sandwichbauteils, wobei die Oberfläche insbesondere eine Sichtseite, also sichtseitige Oberfläche, ist. Durch diese Kombination lassen sich Soft-Touch-Eigenschaften besonders frei konfigurieren.

Die Soft-Toch-Schicht ist eine Schicht, die elastisch verformbar ist. Sie weist einen sogenannten Memory-Effekt auf, das heißt, dass sie durch Berührung eingedrückt werden kann und nach dem Berühren sich wieder in die ursprüngliche Form zurück begibt. Insbesondere ist sie aus Materialien wie Stoff, Schaum, Abstandgewirke oder Vlies. Die Schichtdicke beträgt 2 mm bis 5 mm, insbesondere 3mm.

Der haptische Berührungseffekt (Soft-Touch) wird durch die Soft-Touch-Schicht gesteuert. Die Dekorschicht dagegen ist für das haptische Oberflächenempfinden und das optische Erscheinungsbild des Aufbauteils beziehungsweise Sandwichbauteils verantwortlich und wird beispielsweise aus Leder, Kunstleder, Stoff oder Folie gebildet. Die Dekorschicht hat eine Dicke von 0,5 mm bis 2 mm, insbesondere 1 mm. Beide Funktionen, also der haptische Berührungseffekt sowie das haptische Oberflächenempfinden können jeweils durch die einzelnen Schichten somit getrennt voneinander realisiert beziehungsweise variiert werden, um Kundenanforderungen möglichst gut zu erfüllen.

In seinem Inneren weist das Sandwichbauteil eine brandhemmende Schicht auf. Die brandhemmende Schicht ist also keine Oberflächenschicht, die z.B. einer direkten Berührung zugänglich wäre. Die Oberflächenschicht wird durch die Oberfläche des Aufbauteils bereitgestellt.

Die Erfindung beruht auf der grundlegenden Idee, ein Bauteil mit einer Soft-Touch-Oberfläche zu entwickeln, welches diverse Kundenanforderungen sowie auch Behördenanforderungen für das Brandverhalten in Fahrzeugen, vor allem in Flugzeugen, erfüllt. Ein Dekor sollte hierbei in einem Serienprozess applizierbar sein. Das Dekor ist die an der Oberfläche bzw. Sichtseite des Bauteils eine gestalterische Wirkung erzielende Komponente. Bei Designänderungen sollten möglichst gleichzeitig Änderungen des Grundaufbaus des Sandwichbauteils wenigstens so weit wie möglich vermieden werden. Die Dekorschicht befindet sich im Aufbauteil.

Die Erfindung beruht weiterhin auf der grundlegenden Idee, eine brandhemmende Schicht am Sandwichbauteil vorzusehen, um im Brandfall eine brandhemmende Wirkung am Sandwichbauteil zu erzeugen. Gemäß der Erfindung wird die brandhemmende Schicht jedoch nicht an der Oberfläche beziehungsweise die Oberfläche bedeckend eingesetzt, sondern in das Sandwichbauteil integriert. Hierbei bleiben die originalen Eigenschaften der Soft-Touch-Oberfläche erhalten. Die Soft-Touch-Oberfläche ist die vom Basisteil abgewandte, in der Regel sichtseitige beziehungsweise einer Berührung zugängliche Oberflächenseite des Aufbauteils. Die Soft-Touch-Oberfläche bleibt dabei vollkommen unverändert und kann ihre originalen haptischen und optischen Eigenschaften beibehalten, ohne durch brandhemmende Maßnahmen beeinträchtigt zu werden. Dennoch ergibt sich für das gesamte Sandwichbauteil die gewünschte brandhemmende Wirkung. Durch den Einsatz einer brandhemmenden Schicht, das heißt eines zusätzlichen Brandhemmers, werden gegenüber einem herkömmlichen Sandwichbauteil mit Basisteil und Aufbauteil zum Beispiel Schäume, Abstandsgewirke, etc. mit unterschiedlichen Dekormaterialien wie Leder, Kunstleder, Stoffen und Folien brandsicher verarbeitet. Dies ist insbesondere für die Luftfahrt wichtig. So ergibt sich eine unkritische brandtechnische Qualifizierung von Soft-Touch-Oberflächen beziehungsweise Sandwichbauteilen mit Soft-Touch-Oberflächen. Verschiedene Dekore, wie zum Beispiel Kunstleder, Stoffe, Farben, etc. können nicht nur individuell in VIP-Anwendungen, sondern auch in Serienprozessen verarbeitet werden.

Teilweise ist durch den Einsatz von brandhemmenden Schichten im Gesamtaufbau von Sandwichbauteilen der Einsatz verschiedener, brandkritischer Materialien erst möglich. Nur so können derartige Sandwichbauteile als Ausstattungsteile von Fahrzeugen, insbesondere Flugzeugen, verwendet werden. Geringe Änderungen im Dekor können erfolgen, ohne den Gesamtaufbau vollständig verändern beziehungsweise anpassen zu müssen. Es ergibt sich also die unkritische brandtechnische Qualifizierung von Soft-Touch-Oberflächen bzw. den entsprechenden Sandwichbauteilen im Luftfahrtbereich und die Herstellung von VIP-Ausstattungen in Serienprozessen. Die brandhemmende Schicht wird abhängig von der Kritikalität der Soft-Touch-Materialien wie zum Beispiel Kunstleder, Stoff, Schaum, Abstandsgewirke, etc. so eingestellt, dass geforderte Brandwerte für das Sandwichbauteil erfüllt werden. Abstandsgewebe und Vliese können alternativ zu Schäumen als Funktionsschicht verwendet werden.

Gemäß der Erfindung können durch den Einsatz einer zusätzlichen brandhemmenden Schicht in einem Sandwichbauteil Schäume, Abstandsgewirke usw. mit diversen Dekormaterialien wie Kunstleder, Stoffen, etc. für die Luftfahrt brandsicher verarbeitet werden.

Die brandhemmende Schicht ist zwischen Basisteil und Aufbauteil angeordnet. Dies ermöglicht die freie Gestaltung sowohl von Basisteil als auch von Aufbauteil in herkömmlicher Weise. Die brandhemmende Schicht wird lediglich zwischengeschaltet. Auch ist es so möglich, gleiche Basisteile mit gleichen brandhemmenden Schichten als gleiche Träger vorzukonfektionieren und mit verschiedenen Aufbauteilen zu versehen.

In einer bevorzugten Ausführungsform ist das Basisteil selbst ein Sandwichbauteil, insbesondere ein Faserverbundbauteil. Alternativ ist das Basisteil ein monolithisches oder thermoplastisches Tiefziehteil. Derartige Basisteile werden vor allem in der Luftfahrt eingesetzt, sodass die Erfindung besonders für die Luftfahrt geeignet ist. Es werden also nicht nur Sandwichbauteile (insbesondere: Prepreg / Wabe / Prepreg), sondern auch monolithische (insbesondere mehrlagige Laminate aus Prepreg) und auch thermoplastische Tiefziehteile durch eine brandhemmende Schicht, insbesondere dämmschichtbildende Beschichtung, im Brandverhalten optimiert.

Gemäß der Erfindung ist - wobei die brandhemmende Schicht zwischen Basisteil und Aufbauteil angeordnet ist - das Aufbauteil mit Hilfe von Klebstoff an dem bereits mit der brandhemmenden Schicht beschichteten Basisteil befestigt. Mit anderen Worten bilden Basisteil und brandhemmende Schicht einen Träger als gemeinsame Bauteileinheit, auf welcher das Aufbauteil dann mit Hilfe von Klebstoff befestigt ist. So wird das Brandverhalten der Materialien im Sandwichbauteil durch eine Beschichtung im Sinne einer Vorbehandlung des Basisteils deutlich verbessert. Mit anderen Worten wird das Basisbauteil zunächst mit einer brandhemmenden Schicht versehen und anschließend mit einem Soft-Touch-Aufbau in Form des Aufbauteils dekoriert.

Auch diese Variante eröffnet die Möglichkeit, modulare Systeme zu schaffen, indem insbesondere gleiche Träger, also brandhemmend beschichtete Basisteile, mit unterschiedlichen Aufbauteilen versehen werden können.

In einer bevorzugten Ausführungsform erstreckt sich das Basisteil entlang einer Erstreckungsfläche flächig und weist eine Flachseite auf, welche sich ebenfalls entlang der Erstreckungsfläche erstreckt. Das Aufbauteil und - für die oben genannte Variante - die brandhemmende Schicht sind dann auf der Flachseite aufgebracht. So ergeben sich, sich flächig erstreckende Sandwichbauteile mit Soft-Touch-Oberflächen, welche insbesondere für Innenverkleidungen von Innenräumen von Fahrzeugen Verwendung finden können, zum Beispiel als Kabinenpaneel usw.

In einer bevorzugten Ausführungsform ist die brandhemmende Schicht eine Lackschicht. Mit anderen Worten ist die brandhemmende Schicht auf das Basisteil auflackierbar. Die brandhemmende Schicht entspricht dann einem Schutzlack. Durch die Lackschicht erfolgt eine brandhemmende Vorbehandlung des Basisteils, wenn diese zunächst auf das Basisteil aufgebracht wird, bevor das Aufbauteil aufgebracht wird. Insbesondere wird also das Basisteil mit einem Brandhemmer als brandhemmende Schicht flächig lackiert und erst anschließend mit einem Soft-Touch-Aufbau in Form des Aufbauteils dekoriert.

In einer bevorzugten Ausführungsform ist die brandhemmende Schicht eine intumeszierend brandhemmende Schicht. Eine intumeszierende Schicht schäumt im Brandfall auf und bildet eine Schutzschicht, um von der Brandeinwirkung her gesehen dahinterliegende Schichten des Sandwichbauteils zu schützen. Die zur schützenden Schichten sind beispielsweise die Dekorschichten beziehungsweise das Aufbauteil. Insbesondere enthält die brandhemmende Schicht Blähgraphit, der im Brandfall eine schützende Graphitschicht ausbildet. Alternativ oder zusätzlich ist die brandhemmende Schicht eine ablativ brandhemmende Schicht. Ablative Systeme spalten im Brandfall Wasserdampf ab und kühlen den Brand beziehungsweise verdünnen Brandgase, um ebenfalls schützend brandtechnisch zu wirken. Insbesondere enthält die brandhemmende Schicht Aluminiumhydroxid. Aluminiumhydroxid bildet eine ablativ brandhemmende Schicht. Die beiden genannten Materialien haben sich zur Brandhemmung in der Praxis bewährt.

In einer bevorzugten Ausführungsform ist das Sandwichbauteil zumindest ein Abschnitt einer Innenraumstruktur eines Innenraums eines Fahrzeugs. Der Innenraum ist insbesondere eine Passagierkabine, das Fahrzeug ist insbesondere ein Flugzeug. Eine Innenraumstruktur ist z.B. ein Wand- oder Deckenelement, eine Verkleidung, eine Kabinenabtrennung, eine PSU (Passenger Supply Unit) oder ähnliches. Für die genannten Anwendungsfälle eignen sich die Sandwichbauteile besonders, da diese leicht die brandtechnischen Anforderungen erfüllen können.

Gemäß der Erfindung wird also insbesondere eine Vorbehandlung beziehungsweise Lackierung eines Bauteils in Form des Basisteils mit Schutzlack vorgenommen, um das Brandverhalten von darauf anzubringenden Dekormaterialien zu optimieren. Der Lack ist insbesondere eine ablative oder intumeszierende Schicht, zum Beispiel Blähgraphit, die eine Schutzfunktion für das Dekor übernimmt.

Gemäß der Erfindung ist es möglich, das Basisteil zusammen mit der brandhemmenden Schicht für verschiedene Aufbauteile jeweils individuell auszuführen. Die Ausführungen können dabei unter Umständen sehr ähnlich ausgestaltet werden, wenn nur geringe Variationen bei der brandhemmenden Schicht genügen, um die brandtechnischen Anforderungen für einen Satz verschiedenster Aufbauteile zu erfüllen. Allerdings ist auch Folgendes möglich:
Ein Bauteilsortiment enthält mindestens zwei oben genannte Sandwichbauteile gemäß der Erfindung, bei denen die brandhemmende Schicht zwischen Basisteil und Aufbauteil angeordnet ist. Mindestens zwei der Sandwichbauteile weisen paarweise verschiedene Aufbauteile auf. Die jeweiligen Basisteile mit der brandhemmenden Schicht sind jedoch gleich ausgeführt. So können also auf gleiche Basisteile mit gleicher brandhemmender Schicht, die idealerweise bereits vorkonfektioniert zur Verfügung stehen, verschiedene Aufbauteile nach Bedarf schnell und einfach aufgebracht werden, wobei sichergestellt ist, dass sämtliche entstehenden Sandwichbauteile des Bauteilsortiments jeweils die brandtechnischen Anforderungen erfüllen. Hierzu ist beispielsweise die brandhemmende Schicht ausreichend stark brandhemmend ausgeführt, um auch kritischste Aufbauteile des Sortiments noch brandtechnisch sicher zu schützen. Die sonstigen Vorteile eines derartigen Bauteilsortiments wurden sinngemäß bereits oben im Zusammenhang mit dem erfindungsgemäßen Sandwichbauteil erläutert.

Das Sandwichbauteil und/oder das Bauteilsortiment kann zumindest als Abschnitt einer Innenraumstruktur eines Innenraums, insbesondere einer Passagierkabine, eines Fahrzeugs, insbesondere eines Flugzeugs, verwendet werden. So können insbesondere in der Luftfahrt die kritischen Anforderungen an die Brandeigenschaften von Sandwichbauteilen durch Verwendung der erfindungsgemäßen Elemente erfüllt werden. Die sonstigen Vorteile einer derartigen Verwendung wurden sinngemäß bereits oben im Zusammenhang mit dem erfindungsgemäßen Sandwichbauteil erläutert.

Bei einem Herstellungsverfahren wird zuerst das Basisteil mit der brandhemmenden Schicht versehen und anschließend das Aufbauteil auf das bereits mit der brandhemmenden Schicht beschichtete Basisteil aufgebracht. Die sonstigen Vorteile eines derartigen Verfahrens wurden sinngemäß bereits oben im Zusammenhang mit dem erfindungsgemäßen Sandwichbauteil erläutert. Dies gilt auch für die folgenden bevorzugten Ausführungsformen.

In einer bevorzugten Ausführungsform des Herstellungsverfahrens wird das Aufbauteil mit Hilfe eines Klebstoffs auf dem Basisteil aufgebracht. Der Klebstoff ist insbesondere eine Klebstoffschicht. Insbesondere ist der Klebstoff ein Sprühkleber. Außerdem können bzw. müssen nicht nur Sprühkleber verwendet werden. Es können auch thermoplastische Klebstofffilme oder PSA-Klebstofffilme verwendet werden. Die Herstellung von derart geklebten Sandwichbauteilen ist besonders einfach und kostengünstig durchzuführen.

In einer bevorzugten Ausführungsform des Herstellungsverfahrens wird die brandhemmende Schicht als Lacksicht auf das Basisteil auflackiert. Die Verarbeitung von Lacken in Bezug auf Sandwichbauteile ist besonders einfach durchzuführen.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen in einer schematischen Prinzipskizze:
- Fig. 1: ein Sandwichbauteil gemäß der Erfindung im Querschnitt,
- Fig. 2: ein Bauteilsortiment gemäß der Erfindung im Querschnitt.

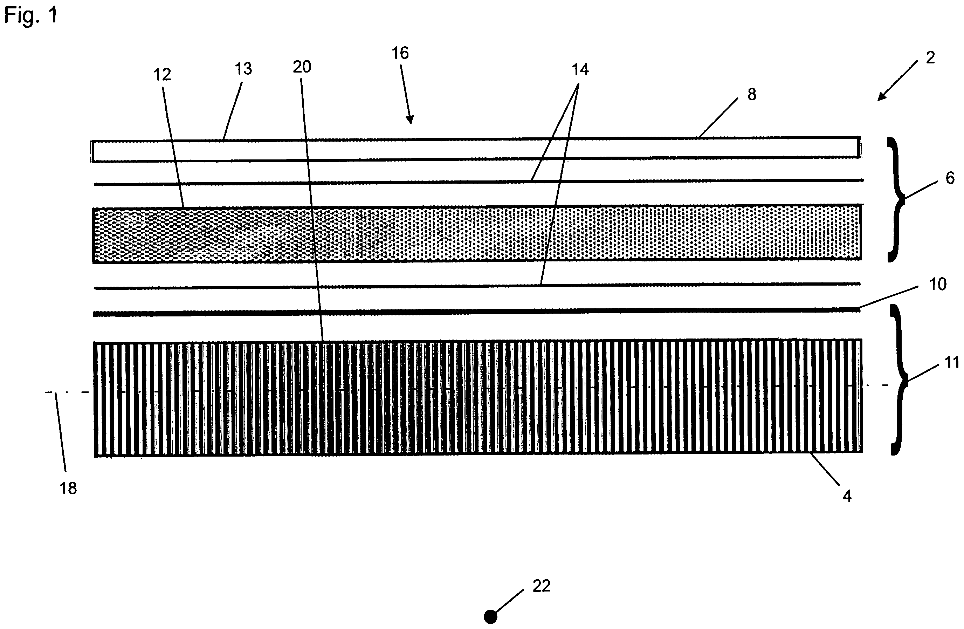

Figur 1 zeigt ein Sandwichbauteil 2, welches ein Basisteil 4 und ein Aufbauteil 6 enthält. Das Aufbauteil 6 bildet bzw. besitzt eine sichtbare bzw. einer Berührung zugängliche Soft-Touch-Oberfläche 8 des Sandwichbauteils 2. Zwischen Basisteil 4 und Aufbauteil 6 ist eine brandhemmende Schicht 10 angeordnet. Die Brandschutzbeschichtung in Form der Schicht 10 ist hier eine intumeszierende Brandschutzbeschichtung auf Basis von Blähgraphit. Das Basisteil 4 selbst ist ein nicht näher dargestelltes Sandwichbauteil, hier ein Faserverbundbauteil, welches selbst aus mehreren nicht näher dargestellten Schichten hergestellt ist.

Das Aufbauteil 6 enthält zwei Funktionsschichten 12, 13 welche durch Klebstoff 14, hier in Form einer flächigen Klebstoffschicht, aneinander befestigt sind. Der Klebstoff 14 ist ein Kontaktklebstoff. Die Funktionsschicht 12 ist eine Soft-Touch-Schicht. Die Funktionsschicht 13 ist eine Dekorschicht. Die Funktionsschicht 12 ist zwischen der Funktionsschicht 13 und dem Basisteil 4 angeordnet. Die Funktionsschicht 13 als Dekorschicht bildet die Oberfläche, also die Soft-Touch-Oberfläche 8 des Sandwichbauteils 2. Die Soft-Touch-Oberfläche 8 stellt außerdem die Sichtseite 16 des Sandwichbauteils 2 dar. In einem Montagezustand in einem Innenraum 22, hier einer Passagierkabine eines nicht weiter dargestellten Fahrzeugs, hier Flugzeugs, ist diese Sichtseite durch Passagiere betrachtbar und/oder einer Berührung durch Passagiere zugänglich. Das Aufbauteil 6 ist ebenfalls mit Hilfe von Klebstoff 14, hier wieder einer Klebstoffschicht, an dem mit der brandhemmenden Schicht 10 versehenen Basisteil 4 befestigt. Basisteil 4 und die darauf angebrachte brandhemmende Schicht 10 bilden zusammen einen Träger 11 für das Aufbauteil 6.

In Fig. 1 ist das Sandwichbauteil 2 in Explosionsdarstellung im Schnitt gezeigt. Tatsächlich sind nach der Fertigstellung des Sandwichbauteils 2 sämtliche dargestellten Schichten jeweils miteinander fest und dauerhaft verbunden.

Das Basisteil 4 erstreckt sich flächig entlang einer Erstreckungsfläche 18, welche in Fig. 1 quer zur Zeichenebene verläuft. Das Basisteil 4 weist daher eine sich ebenfalls parallel zur Erstreckungsfläche 18 beziehungsweise entlang dieser erstreckende Flachseite 20 auf. Auf dieser Flachseite 20 ist sowohl die brandhemmende Schicht 10 als auch das Aufbauteil 6 (unter Zwischenlage der Schicht 10) aufgebracht. Die brandhemmende Schicht 10 ist im Beispiel eine Lackschicht, welche auf das Basisteil 4 auflackiert wurde, bevor das Aufbauteil 6 mit Hilfe des Klebstoffs 14 auf dem mit der brandhemmenden Schicht 10 beschichteten Basisteil 4 aufgebracht wurde.

Das dargestellte Sandwichbauteil 2 ist ein Abschnitt einer Innenraumstruktur, hier einer Seitenverkleidung eines bzw. in einem Innenraum 22 eines nicht dargestellten Fahrzeugs, hier eines Flugzeugs. Der Innenraum 22 ist dessen Passagierkabine.

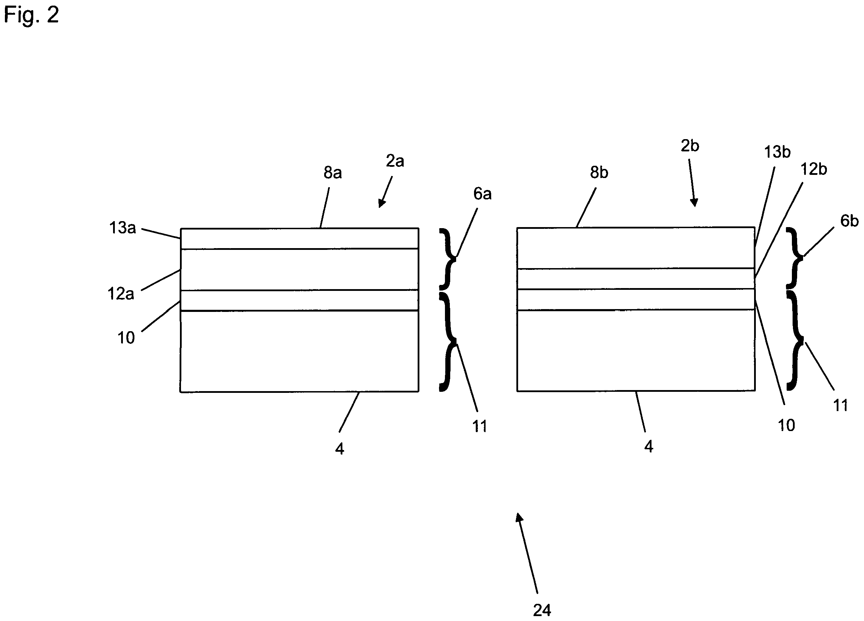

Figur 2 zeigt ein Bauteilsortiment 24, hier bestehend aus zwei Sandwichbauteilen 2a,b, welche paarweise verschiedene Aufbauteile 6a,b aufweisen. Die Basisteile 4 zusammen mit der brandhemmenden Schichten 10, also die Träger 11, sind jeweils gleich ausgeführt. Die Aufbauteile 6a,b unterscheiden sich durch unterschiedliche Funktionsschichten 12a,b, welche hier sowohl bezüglich ihrer Dicke als auch ihrer Materialeigenschaften variieren. Die Funktionsschicht 12a ist eine Soft-Touch-Schicht in Form von Schaumstoff, die Funktionsschicht 12b eine Soft-Touch-Schicht in Form eines Abstandsgewirkes.

Die Funktionsschichten 13a,b variieren in Dicke, Materialeigenschaft und Farbe, Die Funktionsschicht 13a ist eine Dekorschicht in Form von braunem Leder, die Funktionsschicht 13b ist eine Dekorschicht in Form von rotem Stoff. So entstehen unterschiedliche Soft-Touch-Oberflächen 8a, b mit unterschiedlichem Aussehen und haptischen Eigenschaften.

### Bezugszeichenliste

- 2,2a,b: Sandwichbauteil
- 4: Basisteil
- 6,6a,b: Aufbauteil
- 8,8a,b: Soft-Touch-Oberfläche
- 10: Schicht (brandhemmend)
- 11: Träger
- 12,12a, b: Funktionsschicht
- 13,13a,b: Funktionsschicht
- 14: Klebstoff
- 16: Sichtseite
- 18: Erstreckungsfläche
- 20: Flachseite
- 22: Innenraum
- 24: Bauteilsortiment

## Patentansprüche

1. Sandwichbauteil (2,2a,b), mit einem Basisteil (4) und mit einem Aufbauteil (6,6a,b), wobei das Aufbauteil (6,6a,b) eine Soft-Touch-Oberfläche (8,8a,b) des Sandwichbauteils (2,2a,b) bildet, wobei das Aufbauteil (6,6a,b) wenigstens zwei Funktionsschichten (12,12a,b,13,13a,b) enthält und eine der Funktionsschichten (12,12a,b,13,13a,b) eine elastisch verformbare Soft-Touch-Schicht und eine der Funktionsschichten (12,12a,b,13,13a,b) eine die Soft-Touch-Oberfläche (8,8a,b) bildende, für das haptische Oberflächenempfinden und das optische Erscheinungsbild des Aufbauteils (6,6a,b) beziehungsweise Sandwichbauteils (2,2a,b) verantwortliche Dekorschicht ist, wobei die Soft-Touch-Schicht zwischen der Dekorschicht und dem Basisteil (4) angeordnet ist,
**dadurch gekennzeichnet, dass**
das Sandwichbauteil (2,2a,b) in seinem Inneren eine, im Brandfall eine brandhemmende Wirkung am Sandwichbauteil (2,2a,b) erzeugende, brandhemmende Schicht (10) aufweist, und die brandhemmende Schicht (10) zwischen Basisteil (4) und Aufbauteil (6,6a,b) angeordnet ist, wobei das Aufbauteil (6,6a,b) mit Hilfe von Klebstoff (14) am mit der brandhemmenden Schicht (10) beschichteten Basisteil (4) befestigt ist, und Basisteil (4) und brandhemmende Schicht (10) einen Träger als gemeinsame Bauteileinheit bilden, auf welcher das Aufbauteil (6,6a,b) dann mit Hilfe von Klebstoff (14) befestigt ist.

2. Sandwichbauteil (2,2a,b) nach einem der vorhergehenden Ansprüche,
**dadurch gekennzeichnet, dass**
das Basisteil (4) selbst ein Sandwichbauteil, insbesondere ein Faserverbundbauteil, oder ein monolithisches oder thermoplastisches Tiefziehteil ist.

3. Sandwichbauteil (2,2a,b) nach einem der vorhergehenden Ansprüche,
**dadurch gekennzeichnet, dass**
wenigstens zwei der Funktionsschichten (12,12a,b,13,13a,b) durch Klebstoff (14), insbesondere eine Klebstoffschicht, aneinander befestigt sind.

4. Sandwichbauteil (2,2a,b) nach einem der vorhergehenden Ansprüche,
**dadurch gekennzeichnet, dass**
das Aufbauteil (6,6a,b) mit Hilfe von einer Klebstoffschicht am mit der brandhemmenden Schicht (10) beschichteten Basisteil (4) befestigt ist.

5. Sandwichbauteil (2,2a,b) nach einem der vorhergehenden Ansprüche,
**dadurch gekennzeichnet, dass**
sich das Basisteil (4) entlang einer Erstreckungsfläche (18) flächig erstreckt und eine sich entlang der Erstreckungsfläche (18) erstreckende Flachseite (20) aufweist, und das Aufbauteil (6,6a,b), und insbesondere die brandhemmende Schicht (10), auf der Flachseite (20) aufgebracht ist.

6. Sandwichbauteil (2,2a,b) nach einem der vorhergehenden Ansprüche,
**dadurch gekennzeichnet, dass**
die brandhemmende Schicht (10) eine Lackschicht ist.

7. Sandwichbauteil (2,2a,b) nach einem der vorhergehenden Ansprüche,
**dadurch gekennzeichnet, dass**
die brandhemmende Schicht (10) eine intumeszierend brandhemmende Schicht ist, die insbesondere Blähgraphit enthält und/oder eine ablativ brandhemmende Schicht ist, die insbesondere Aluminiumhydroxid enthält.

8. Sandwichbauteil (2,2a,b) nach einem der vorhergehenden Ansprüche,
**dadurch gekennzeichnet, dass**
das Sandwichbauteil (2,2a,b) zumindest ein Abschnitt einer Innenraumstruktur eines Innenraums (22), insbesondere einer Passagierkabine, eines Fahrzeugs, insbesondere eines Flugzeugs, ist.

## Claims

1. Sandwich component (2, 2a,b) with a base part (4) and with a top part (6, 6a,b), wherein the top part (6, 6a,b) forms a soft-touch surface (8, 8a,b) of the sandwich component (2, 2a,b), wherein the top part (6, 6a,b) contains at least two functional layers (12, 12a,b, 13, 13a,b) and one of the functional layers (12, 12a,b, 13, 13a,b) is an elastically deformable soft-touch layer and one of the functional layers (12, 12a,b, 13, 13a,b) is a decorative layer forming the soft-touch surface (8, 8a,b) and responsible for the haptic surface feel and the visual appearance of the top part (6, 6a,b) or of the sandwich component (2, 2a,b), wherein the soft-touch layer is arranged between the decorative layer and the base part (4),
**characterized in that**
the sandwich component (2, 2a,b) has, in its interior, a fire-retardant layer (10) which produces a fire-retardant action on the sandwich component (2, 2a,b) in the event of fire, and the fire-retardant layer (10) is arranged between the base part (4) and the top part (6, 6a,b), wherein the top part (6, 6a,b) is fastened to the base part (4), which is coated with the fire-retardant layer (10), using an adhesive (14), and the base part (4) and the fire-retardant layer (10) form a substrate as a common component unit to which the top part (6, 6a,b) is then fastened using an adhesive (14).

2. Sandwich component (2, 2a,b) according to one of the preceding claims,
**characterized in that**
the base part (4) itself is a sandwich component, in particular a fibre composite component, or a monolithic or thermoplastic deep-drawn part.

3. Sandwich component (2, 2a,b) according to one of the preceding claims,
**characterized in that**
at least two of the functional layers (12, 12a,b, 13, 13a,b) are fastened to one another by an adhesive (14), in particular an adhesive layer.

4. Sandwich component (2, 2a,b) according to one of the preceding claims,
**characterized in that**
the top part (6, 6a,b) is fastened to the base part (4), which is coated with the fire-retardant layer (10), using an adhesive layer.

5. Sandwich component (2, 2a,b) according to one of the preceding claims,
**characterized in that**
the base part (4) extends areally along an area of extent (18) and has a flat face (20) extending along the area of extent (18), and the top part (6, 6a,b), and in particular the fire-retardant layer (10), is applied to the flat face (20).

6. Sandwich component (2, 2a,b) according to one of the preceding claims,
**characterized in that**
the fire-retardant layer (10) is a layer of lacquer.

7. Sandwich component (2, 2a,b) according to one of the preceding claims,
**characterized in that**
the fire-retardant layer (10) is an intumescently fire-retardant layer, in particular containing expanded graphite, and/or is an ablatively fire-retardant layer, in particular containing aluminium hydroxide.

8. Sandwich component (2, 2a,b) according to one of the preceding claims,
**characterized in that**
the sandwich component (2, 2a,b) is at least a portion of an interior structure of an interior space (22), in particular of a passenger cabin, of a vehicle, in particular of an aircraft.

## Revendications

1. Composant (2, 2a,b) en sandwich, présentant une partie de base (4) et une partie rapportée (6, 6a,b), la partie rapportée (6, 6a,b) formant une surface (8, 8a,b) au toucher doux du composant (2, 2a,b) en sandwich, la partie rapportée (6, 6a,b) contenant au moins deux couches fonctionnelles (12, 12a,b, 13, 13a,b), l'une des couches fonctionnelles (12, 12a,b, 13, 13a,b) étant une couche élastiquement déformable au toucher doux et l'une des couches fonctionnelles (12, 12a,b, 13, 13a,b) étant une couche décorative formant la surface (8, 8a,b) et responsable de la sensation tactile de la surface et de l'aspect visuel de la partie rapportée (6, 6a,b) ou du composant (2, 2a,b) en sandwich, la couche au toucher doux étant disposée entre la couche décorative et la partie de base (4), **caractérisé en ce que**
le composant (2, 2a,b) en sandwich présente à l'intérieur une couche (10) de ralentissement du feu qui forme en cas d'incendie un effet de ralentissement du feu sur le composant (2, 2a,b) en sandwich, la couche (10) de ralentissement du feu étant disposée entre la partie de base (4) et la partie rapportée (6, 6a,b), la partie rapportée (6, 6a,b) étant fixée à l'aide d'un adhésif (14) sur la partie de base (4) revêtue de la couche (10) de ralentissement du feu, la partie de base (4) et la couche (10) de ralentissement du feu constituant sous la forme d'une unité commune un support sur lequel la partie rapportée (6, 6a,b) est alors fixée à l'aide de l'adhésif (14).

2. Composant (2, 2a,b) en sandwich selon l'une des revendications précédentes,
**caractérisé en ce que**
la partie de base (4) est elle-même un composant en sandwich, en particulier un composant en composite de fibres ou une pièce emboutie monolithique ou thermoplastique.

3. Composant (2, 2a,b) en sandwich selon l'une des revendications précédentes,
**caractérisé en ce que**
au moins deux des couches fonctionnelles (12, 12a,b, 13, 13a,b) sont fixées l'une à l'autre par un adhésif (14) et en particulier par une couche d'adhésif.

4. Composant (2, 2a,b) en sandwich selon l'une des revendications précédentes,
**caractérisé en ce que**
la partie rapportée (6, 6a,b) est fixée à l'aide d'une couche d'adhésif sur la partie de base (4) revêtue de la couche (10) de ralentissement du feu.

5. Composant (2, 2a,b) en sandwich selon l'une des revendications précédentes,
**caractérisé en ce que**
la partie de base (4) s'étend à plat dans une surface d'extension (18) et présente un côté plat (20) qui s'étend le long de la surface d'extension (18), la partie rapportée (6, 6a,b) et en particulier la couche (10) de ralentissement du feu étant appliquée sur le côté plat (20).

6. Composant (2, 2a,b) en sandwich selon l'une des revendications précédentes,
**caractérisé en ce que**
la couche (10) de ralentissement du feu est une couche de vernis.

7. Composant (2, 2a,b) en sandwich selon l'une des revendications précédentes,
**caractérisé en ce que**
la couche (10) de ralentissement du feu est une couche intumescente de ralentissement du feu qui contient en particulier du graphite soufflé et/ou est une couche ablative de ralentissement du feu qui contient en particulier de l'hydroxyde d'aluminium.

8. Composant (2, 2a,b) en sandwich selon l'une des revendications précédentes,
**caractérisé en ce que**
le composant (2, 2a,b) en sandwich est au moins une section de la structure de l'habitacle (22), en particulier d'une cabine de passagers, d'un véhicule et en particulier d'un avion.
